# FASCICULE DE BREVET EUROPEEN

(11) **EP 0 365 406 B1**
(45) Date de publication et mention de la délivrance du brevet: **29.09.1993**
(21) Numéro de dépôt: 89402832.3
(22) Date de dépôt: 13.10.1989
(51) Int. Cl.: G02B 27/00

(54) **Système optique de collimation notamment pour visuel de casque**
Optisches Kollimationssystem für eine Helmsichtanzeige
Optical collimating system for a helmet visual

(30) Priorité: 21.10.1988 FR 8813829; 10.03.1989 FR 8903152
(43) Date de publication de la demande: 25.04.1990
(73) Titulaire: THOMSON-CSF, 75008 Paris (FR)
(72) Inventeur: Gerbe, Jean-Pierre, F-92045 Paris la Défense (FR); Migozzi, Jean-Blaise, F-92045 Paris la Défense (FR); Monnier, Laurent, F-92045 Paris la Défense (FR)
(74) Mandataire: Courtellemont, Alain

(56) Documents cités:
- EP-A- 0 077 193
- GB-A- 1 264 343
- GB-A- 2 039 383
- US-A- 3 923 370
- US-A- 4 439 755
- US-A- 4 465 347
- US-A- 4 711 512
- US-A- 4 729 634
- SPIE vol. 778, 1987, Display System Optics pages 83 - 87; J.E.Melzer et al.: "An integrated approach to helmet display system design"

## Description

La présente invention concerne un système optique de collimation qui est prévu pour être monté sur un casque porté par un observateur, c'est-à-dire pour constituer un visuel de casque. Son application est plus particulièrement envisagée dans le domaine aéronautique.

Les avions d'armes et les hélicoptères de combat nécessitent la présentation au pilote d'informations de pilotage et de conduite de tir superposées au paysage extérieur. Ce rôle est aujourd'hui assuré par le viseur tête haute, présent dans tous les avions d'armes modernes et dans certains hélicoptères - L'inconvénient de ce type de visualisation est qu'elle ne peut présenter une image que dans un champ limité et toujours centré dans l'axe de l'avion. Par contre, le pilote peut avoir à effectuer des visées éloignées de l'axe de l'avion, d'où l'idée d'une visualisation liée à la position de la tête du pilote. Un tel concept nécessite d'une part, un système permettant de détecter la position de la tête, et d'autre part, un système optoélectronique permettant d'élaborer une image lumineuse et de la collimater. Ces deux systèmes doivent être disposés sur le casque du pilote, ce qui implique des contraintes très importantes, notamment sur le poids.

Les caractéristiques essentielles qui devraient être prises en compte pour réaliser un tel système sont les suivantes :
- une gêne visuelle minimale ; en effet, le système optique collimatant l'image doit gêner le moins possible la vision du monde extérieur et également éviter de créer un masque dans le champ de vision ;
- la sécurité ; le système optique étant près de l'oeil il doit assurer, en cas de choc, que l'oeil ne sera pas blessé ;
- le poids ; le poids doit être minimal notamment si le système est destiné à être monté sur un avion d'armes, il devra être aussi léger que possible pour éviter la fatigue, surtout sous facteur de charge important.

En outre, le système de collimation doit répondre à des performances qui concernent généralement un champ important, une résolution compatible de l'oeil et une forte luminosité.

Un brevet délivré aux Etats-Unis sous le n° 4.711.512 décrit un système optique de collimation compact.

Dans le document SPIE, volume 778, Display System Optics (1987), un article de James E.MELZER et Eric W.LARKIN intitulé "An intégral approach to helmet display system design", pages 83 à 88, décrit un visuel de casque comportant : un générateur d'une image lumineuse synthétique à collimater, un objectif de collimation du rayonnement lumineux correspondant à l'image synthétique et une optique de combinaison composée d'un montage afocal de deux miroirs paraboliques, un premier miroir réfléchissant le rayonnement de l'image collimatée vers le deuxième miroir, lequel est partiellement réfléchissant pour réfléchir ce rayonnement vers l'observateur et permettre simultanément la transmission du rayonnement provenant de l'extérieur et compris dans le champ du système. En outre, le visuel de casque comporte un certain nombre de miroirs de renvoi pour dévier le trajet optique et permettre le montage sur casque. Dans ce montage antérieur, les miroirs paraboliques travaillent hors d'axe, ce qui est cause d'aberrations et diminue la qualité de l'image à moins de imiter assez fortement le champ du viseur.

Le but de l'invention est de remédier à ces inconvénients, en particulier en aménageant le système optique entre les deux miroirs paraboliques.

A cet effet, l'invention a pour objet un système tel que décrit par les revendications.

La présente invention sera mieux comprise à l'aide de la description ci-après, donnée à titre d'exemple à l'aide des figures annexées qui représentent :
- la figure 1, un schéma simplifié d'un système optique de collimation selon l'invention ;
- la figure 2, un schéma plus détaillé d'une réalisation montrant un système optique de collimation selon l'invention associé à un casque ;
- la figure 3, un schéma simplifié d'un système optique collimateur conforme à l'invention ;
- la figure 4, un schéma simplifié montrant la disposition d'un système par rapport à un observateur ;
- la figure 5, une vue partielle, en section selon une direction de visualisation, pour montrer comment éviter un effet de masque :
- la figure 6, un schéma d'un exemple de réalisation sous forme d'un visuel de casque ;
- la figure 7, un schéma partiel montrant le cheminement des rayons dans une réalisation dite "repliée" du système.

Dans les différentes figures les éléments correspondants sont désignés par les mêmes repères.

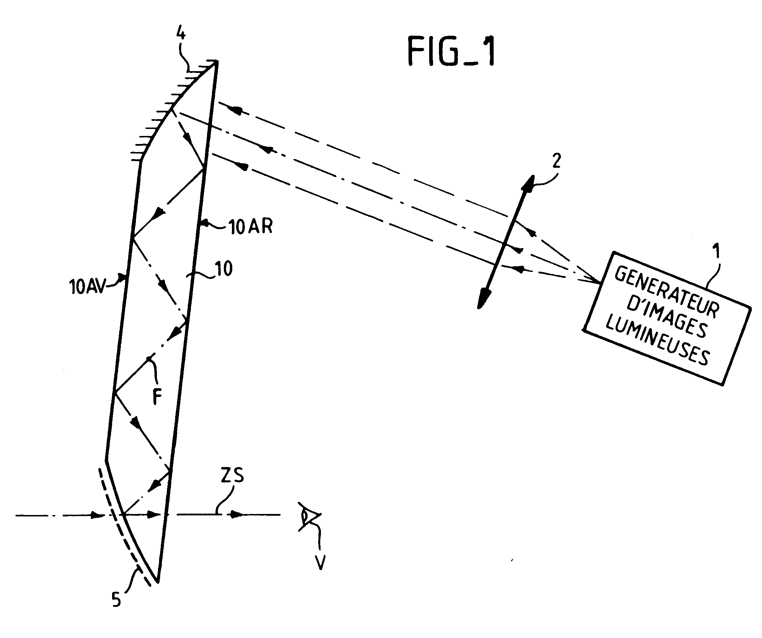

La figure 1 montre un système optique de collimation qui comporte en série sur un même trajet optique : un générateur d'images lumineuses 1, un objectif de collimation 2, un premier miroir parabolique 4, et un deuxième miroir parabolique 5. Les miroirs 4 et 5 forment un système afocal ; leur foyer commun F a été indiqué sur le figure 1. Le miroir 4 est totalement réfléchissant et le miroir 5 semi-transparent pour laisser passer le rayonnement provenant du paysage extérieur.

Les miroirs paraboliques 4 et 5 constituent les extrémités d'un conducteur de lumière 10, ayant sensiblement une forme de prisme, en matériau transparent, à deux faces parallèles 10 AV, 10 AR. Ce conducteur de lumière 10 sera appelé par la suite lame. Les miroirs paraboliques 4 et 5, forment une optique afocale de grossissement 1. Le cheminement des rayons est indiqué par des traits interrompus munis de flèches ; il est tel que le rayonnement issu du générateur d'images 1 rentre dans la lame 10 et en ressort, après réflection sur les miroirs 4 et 5, par la même face 10 AR ; une telle conception facilite le montage sur un casque.

L'objectif de collimation 2 forme l'image à l'infini de l'image lumineuse élaborée par le générateur 1 sur un écran ; dans l'exemple décrit le générateur comporte un tube à rayons cathodiques ; dans d'autres réalisations le générateur 1 peut comporter un panneau à cristaux liquides, ou toute autre source d'images. L'image collimatée pénètre dans la lame 10 pour être réfléchie par le miroir parabolique 4 puis par le miroir parabolique 5. La lame à faces parallèles 10 assure le cheminement optique entre les miroirs 4 et 5 par une série de réflexions totales sur ses faces parallèles.

Le miroir parabolique semi-transparent 5 constitue une optique de combinaison car il permet le mélange du rayonnement collimaté provenant du générateur 1, avec le rayonnement provenant du paysage extérieur et transmis, à travers le miroir 5, vers l'observateur symbolisé par un oeil V.

Les réflexions totales internes à la lame 10 sur les faces avant, 10AV, et arrière, 10AR, n'entraînent aucune perte de lumière, même si ces faces ne sont pas traitées. Les miroirs paraboliques 4 et 5 formant un système afocal, l'image à la sortie du miroir 5 est également renvoyée à l'infini comme elle l'était à l'entrée. Par rapport à un système optique correspondant mais dépourvu de lame à faces parallèles, les miroirs, et en particulier le miroir de combinaison 5, font un angle moindre avec la direction de visée ZS, ce qui permet d'utiliser les miroirs 4 et 5 avec un hors d'axe moindre et d'obtenir ainsi des champs plus grands en conservant une qualité d'image correcte.

L'ensemble des réflexions totales internes à la lame 10 contribue également à faire descendre l'image du dessus de la tête de l'observateur sans avoir à utiliser des miroirs paraboliques de renvoi ayant un fort hors d'axe, ce qui permet, là aussi, l'obtention de champs importants.

Le traitement du miroir de combinaison 5 est neutre dans l'exemple décrit ; dans d'autres réalisations il peut être sélectif (dépôt optique filtrant ou dépôt d'un hologramme) pour ne réfléchir que la bande spectrale du générateur d'images (bande située dans le vert pour un tube cathodique). Quant au miroir parabolique 4, il est totalement réfléchissant car non utilisé en transmission.

Pour la vision du paysage ou d'un autre motif lumineux, par l'observateur, à travers la lame en dehors du champ du visuel de casque, c'est-à-dire en dehors du miroir 5, la lame 10 n'introduit pratiquement pas de perturbation étant donné que les faces avant, 10AV, et arrière, 10AR, sont utilisées en transmission pour ce rayonnement.

Les faces latérales gauche et droite de la lame 10 sont taillées en biseau selon, respectivement, deux plans qui passent par l'oeil. Ainsi, elles sont vues exactement par la tranche par l'observateur ce qui supprime le masque qu'elles pourraient créer sur la vision extérieure.

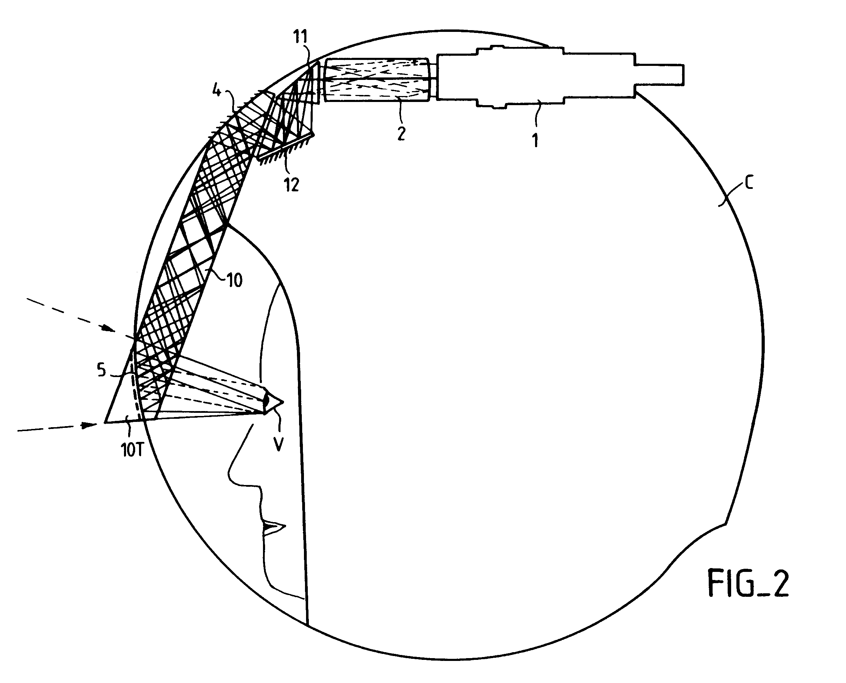

La figure 1 correspond à une réalisation de laboratoire. La figure 2 correspond à une réalisation élaborée à l'aide des enseignements tirés de la réalisation selon la figure 1 ; elle a été spécialement étudiée pour être montée dans un casque C.

Le système optique de collimation selon la figure 2 a été représenté, pour ses parties cachées, comme vu par transparence à travers la paroi extérieure du casque C ; ce système optique se distingue de celui selon la figure 1 par l'adjonction d'un prisme 11 et d'un miroir plan 12 et par le fait que la lame 10 est prolongée vers le bas par un élément terminal transparent, 10T. Le prisme 11 et le miroir 12 sont disposés en série entre l'objectif de collimation 2 et la lame 10 et sont destinés à allonger le chemin optique pour adapter la forme du système optique à la forme du casque C. L'élément terminal 10T a un volume dont les limites sont : le miroir 5, les prolongements de la face avant, 10AV, et des faces latérales de la lame 10 et le plan passant par l'oeil et par le bord inférieur du miroir 5.

La réalisation selon la figure 2 comporte deux systèmes optiques de collimation associés au casque C pour constituer un visuel binoculaire ; le second système, identique au premier, n'est pas visible sur la figure 2.

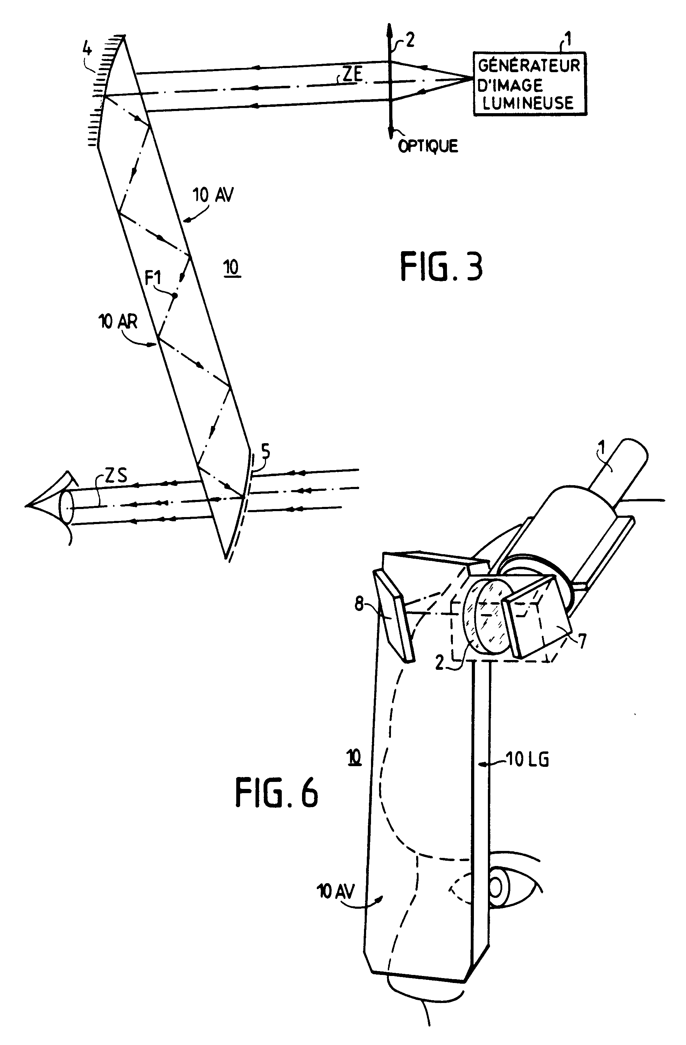

Le système optique de collimation selon la figure 3 comporte un générateur d'images lumineuses 1, un objectif de collimation 2, un premier miroir parabolique 4, et un deuxième miroir parabolique 5. Les miroirs 4 et 5 forment un système afocal de grossissement 1 et de foyer commun F1. Le miroir 4 est totalement réfléchissant et le miroir 5 semi-transparent pour laisser passer le rayonnement provenant du paysage extérieur.

Les miroirs paraboliques 4 et 5 sont disposés en extrémité d'un conducteur de lumière formé d'une lame à faces parallèles 10 en matériau transparent. Le cheminement des rayons est indiqué, pour l'axe optique, sur la figure 3.

L'objectif de collimation 2 forme l'image à l'infini de la présentation lumineuse élaborée par le générateur 1. L'image collimatée est ensuite réfléchie par le miroir parabolique 4 et reformée en sortie selon un rayonnement parallèle par le miroir parabolique 5. La lame à face parallèles assure le cheminement optique intermédiaire par une série de réflexions totales sur ses faces parallèles : la face avant 10AV et la face arrière 10AR.

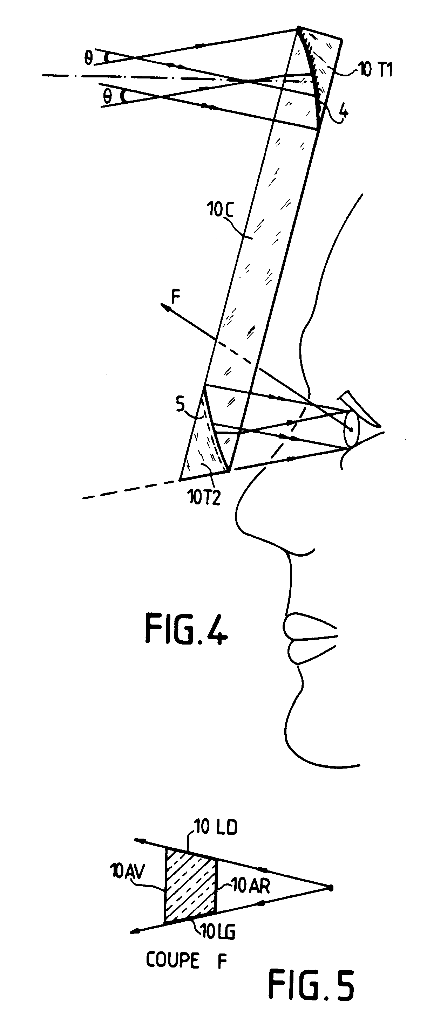

Le miroir parabolique semi-transparent 5 constitue un miroir de combinaison car il permet le mélange du rayonnement collimaté avec le rayonnement extérieur transmis par ce miroir vers l'observateur. Dans une application à un visuel de casque, ce rayonnement extérieur représente la vision du paysage dans le champ du visuel de casque. Ce champ est repéré par l'angle ϑ dans le plan de la figure 4 ; il correspond aux inclinaisons extrêmes des rayons transmis par le système optique de collimation vers l'observateur.

Les réflexions totales internes sur les faces 10AV et 10AR de la lame 10 n'entraînent aucune perte de lumière, même si ces faces 10AV et 10 AR ne sont pas traitées. Les miroirs paraboliques 4 et 5 formant un système afocal, l'image à la sortie du miroir 5 est également renvoyée à l'infini comme elle l'était à l'entrée. Les miroirs paraboliques 4 et 5 sont utilisés hors d'axe. Un miroir parabolique donne une image parfaite pour l'infini et son foyer. En outre, du fait de la symétrie du système certaines aberrations se compensent. Par contre, la courbure de champ doit être corrigée au niveau de l'objectif de collimation 2. Grâce à la lame 10, les miroirs, et en particulier le miroir de combinaison 5, peuvent avoir un angle faible avec la verticale à la direction de visée (axe optique ZS de sortie, Fig. 1) ce qui permet d'utiliser les miroirs 4 et 5 avec un hors d'axe faible et d'obtenir ainsi des champs plus grands en conservant une qualité d'image correcte par rapport à un système dépourvu du conducteur optique à lame intermédiaire.

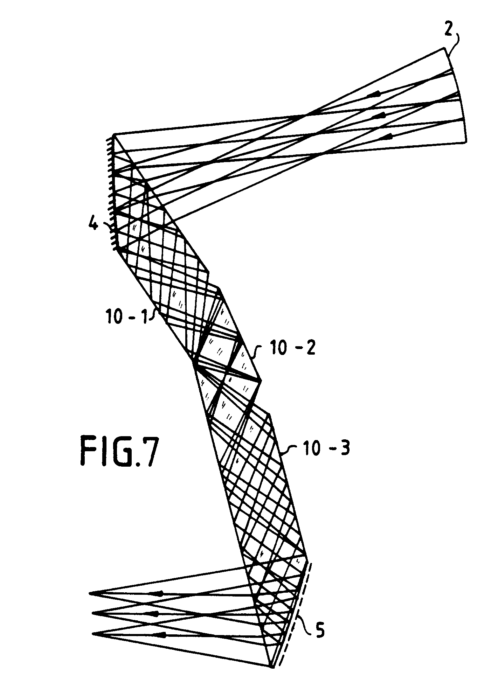

L'ensemble des réflexions totales internes contribue également à faire descendre l'image du dessus de la tête de l'observateur (figure 4 et figure 6) sans avoir à utiliser des miroirs paraboliques ayant un fort hors d'axe ce qui permet ainsi l'obtention de champs importants.

Le traitement du miroir de combinaison 5 peut être neutre, ou sélectif (dépôt optique filtrant ou dépôt d'un hologramme) pour ne réfléchir que la bande spectrale du générateur d'images (bande située dans le vert pour un tube cathodique) ; l'autre miroir parabolique ,4, est totalement réfléchissant car non utilisé en transmission.

Pour la vision du paysage ou d'un autre motif lumineux, par l'observateur, à travers la lame en dehors du champ du visuel de casque, donc en dehors du miroir 5, la lame 10 n'introduit pratiquement pas de perturbation étant donné que les faces 10AV et 10AR sont utilisées en transmission pour ce rayonnement.

Les faces latérales gauche 10LG et droite 10LD de la lame sont avantageusement taillées en biais par rapport aux faces parallèles, de manière à converger vers l'oeil. Ainsi, elles sont vues exactement par la tranche par l'observateur ce qui supprime le masque qu'elles pourraient créer sur la vision extérieure.

La figure 5 montre une coupe transversale de la lame suivant une direction F indiquée sur la figure 4 pour illustrer cette taille des faces latérales 10LG et 10LD.

Pour faciliter l'exécution des miroirs 4 et 5, la lame 10 est avantageusement constituée, comme représentée figure 4, par un élément central 10C et deux éléments terminaux 10T1 et 10T2 pour former globalement un volume de type polyédrique, limité par six faces planes. Les faces en regard de ces trois éléments sont usinées selon des surfaces paraboliques et sur ces surfaces des dépôts réfléchissants ou semi-réfléchissants sont effectués pour constituer respectivement les miroirs 4 et 5 d'extrémité.

En outre, l'élément terminal 10T2 est taillé à sa partie inférieure de manière similaire aux faces latérales 10LD et 10LG pour être vu exactement par la tranche et ne pas créer d'effet de masque (figure 4).

Dans le cadre d'une application à un visuel de casque, la figure 6 représente schématiquement le positionnement de l'ensemble des éléments. Sur cette représentation le casque n'est pas figuré et le générateur 1 est un tube cathodique miniature. Le montage comporte, en sus, des miroirs déviateurs 7 et 8 pour renvoyer l'image lumineuse émise par le générateur 1 vers l'objectif de collimation 2 et la réfléchir en sortie de cette optique vers le premier miroir parabolique 4 à l'intérieur de la lame 10. L'ensemble formé par le tube cathodique 1, le miroir déviateur 7 et l'objectif 2 peut être disposé sur le haut du casque ainsi que le miroir déviateur 8. Le dispositif à lame 10 comportant les miroirs 4 et 5 peut être intégré à la visière du casque.

Une solution conforme à l'invention peut présenter des performances de champ de 40° en gisement et 20° en site. L'épaisseur de la lame peut être de 10 à 15mm environ ce qui donne un poids faible pour l'ensemble, notamment si le matériau transparent de la lame est un plastique.

La figure 7 représente le cheminement des rayons dans le cas d'une version repliée de l'élément central 10C du dispositif à lame 10 qui est formé de trois éléments successifs 10-1,10-2,10-3, comme représenté. Cette version repliée peut, dans certains cas, être plus facile à monter sur un casque.

D'une façon générale et comme il a été indiqué lors de la description de la figure 2, deux systèmes conformes à l'invention et conçus respectivement pour l'oeil droit et pour l'oeil gauche, permettent de constituer un visuel de casque binoculaire.

## Revendications

1. Système optique de collimation comportant en série : un générateur d'images (1) pour fournir un rayonnement lumineux, un objectif (2) de collimation pour collimater le rayonnement, une optique de combinaison comportant un montage afocal avec un premier et un second miroir paraboliques, le premier miroir (14) étant réfléchissant pour réfléchir le rayonnement collimaté vers le second miroir et le second miroir (15) étant partiellement transparent pour permettre simultanément la transmission par réflexion, vers un observateur (V), du rayonnement reçu du premier miroir et la transmission par transparence, vers ledit observateur, d'un rayonnement extérieur, caractérisé en ce que l'optique de combinaison comporte un conducteur de lumière (10), ayant sensiblement une forme de prisme, en matériau transparent, présentant deux extrémités, une première (10 AR) et une seconde (10 AV) faces parallèles, en ce que les deux extrémités sont constituées respectivement par les deux miroirs paraboliques, et en ce que le trajet optique du rayonnement lumineux entre l'objectif (2) et l'observateur (V) comprend, à la suite, une première traversée d'une des deux faces parallèles, une réflexion sur le premier miroir (4), plusieurs réflexions totales internes sur lesdites faces parallèles, une réflexion sur le second miroir (5) et une seconde traversée d'une des deux faces parallèles.

2. Système selon la revendication 1, caractérisé en ce que ledit conducteur de lumière (10) comporte en outre deux faces latérales (10 LD, 10 LG) taillées en biais par rapport aux dites faces parallèles de (10 AR, 10 AV) manière à converger vers l'observateur.

3. Système selon l'une quelconque des revendications précédentes, caractérisé en ce qu'au conducteur de lumière (10) est associé un élément terminal transparent (10T ; 10T2) qui prolonge ledit conducteur de lumière au delà du second miroir (5).

4. Système selon la revendication 1, caractérisé en ce que la première et la seconde traversée se font à travers la même face parallèle (10 AR).

5. Système selon la revendication 1, caractérisé en ce que la première et la seconde traversée se font respectivement à travers les première et seconde faces parallèles.

6. Système optique de collimation comportant en série : un générateur d'images (1) pour fournir un rayonnement lumineux, un objectif (2) de collimation pour collimater le rayonnement, une optique de combinaison comportant un montage afocal avec un premier et un second miroir paraboliques, le premier miroir (4) étant réfléchissant pour réfléchir le rayonnement collimaté vers le second miroir et le second miroir (5) étant partiellement transparent pour permettre simultanément la transmission par réflexion, vers un observateur (V), du rayonnement reçu du premier miroir et la transmission par transparence, vers ledit observateur, d'un rayonnement extérieur, caractérisé en ce que l'optique de combinaison comporte plusieurs conducteurs de lumière successifs se repliant (10-1, 10-2, 10-3), chacun ayant sensiblement une forme de prisme, en matériau transparent, chacun ayant une première et une seconde faces parallèles, en ce qu'une extrémité d'un premier conducteur de lumière (10-1) et une extrémité d'un dernier conducteur de lumière (10-3) sont constituées respectivement par les deux miroirs paraboliques, et en ce que le trajet optique du rayonnement lumineux entre l'objectif (2) et l'observateur (V) comprend, à la suite, une première traversée d'une des deux faces parallèles du premier conducteur de lumière (10-1), une réflextion sur le premier miroir (4), plusieurs réflexions totales internes sur lesdites faces parallèles des conducteurs de lumière , une réflexion sur le second miroir (5) et une seconde traversée d'une des deux faces parallèles du dernier conducteur de lumière (10-3).

## Claims

1. Optical collimation system including in series: an image generator (1) for supplying a luminous radiation, a collimating objective (2) for collimating the radiation, an optical combining system including an afocal assembly with a first parabolic mirror and a second parabolic mirror, the first mirror (4) being reflecting to reflect the collimated radiation towards the second mirror, and the second mirror (5) being partially transparent to permit simultaneously the transmission by reflection, towards an observer (V), of the radiation received from the first mirror and the transmission by transparency, towards the said observer, of an external radiation, characterised in that the optical combining system includes a light conductor (10), having substantially a prism shape, of transparent material, exhibiting two ends, a first face (10 AR) and a second face (10 AV), which faces are parallel, in that the two ends are constituted respectively by the two parabolic mirrors, and in that the optical path of the luminous radiation between the objective (2) and the observer (V) comprises, in succession, a first pass through one of the two parallel faces, a reflection on the first mirror (4), a plurality of total internal reflections on the said parallel faces, a reflection on the second mirror (5) and a second pass through one of the two parallel faces.

2. System according to Claim 1, characterised in that the said light conductor (10) further includes two lateral faces (10 LD, 10 LG) which are cut at a slant in relation to the said parallel faces (10 AR, 10 AV) in such a manner as to converge towards the observer.

3. System according to either one of the preceding claims, characterised in that a transparent terminal element (10T; 10T2) which extends the said light conductor beyond the second mirror (5) is associated with the light conductor (10).

4. System according to Claim 1, characterised in that the first and the second pass take place through the same parallel face (10 AR).

5. System according to Claim 1, characterised in that the first pass and the second pass take place respectively through the first parallel face and the second parallel face.

6. Optical collimation system including in series: an image generator (1) for supplying a luminous radiation, a collimating objective (2) for collimating the radiation, an optical combining system including an afocal assembly with a first parabolic mirror and a second parabolic mirror, the first mirror (4) being reflecting to reflect the collimated radiation towards the second mirror, and the second mirror (5) being partially transparent to permit simultaneously the transmission by reflection, towards an observer (V), of the radiation received from the first mirror and the transmission by transparency, towards the said observer, of an external radiation, characterised in that the optical combining system includes a plurality of folding successive light conductors (10-1, 10-2, 10-3), each having substantially a prism shape, of transparent material, each having a first face and a second face, which faces are parallel, in that one end of a first light conductor (10-1) and one end of a last light conductor (10-3) are constituted respectively by the two parabolic mirrors, and in that the optical path of the luminous radiation between the objective (2) and the observer (V) comprises, in succession, a first pass through one of the two parallel faces of the first light conductor (10-1), a reflection on the first mirror (4), a plurality of total internal reflections on the said parallel faces of the light conductors, a reflection on the second mirror (5) and a second pass through one of the two parallel faces of the last light conductor (10-3).

## Patentansprüche

1. Optisches System zur Kollimation, das hintereinander enthält: einen Bildgenerator (1) zum Liefern einer Lichtstrahlung, ein Kollimationsobjektiv (2) zur Kollimation der Strahlung, eine Kombinationsoptik, die einen brennpunktlosen Aufbau mit einem ersten und einem zweiten Parabolspiegel umfaßt, wobei der erste Spiegel (4) reflektierend ist, um die parallel ausgerichtete Strahlung zum zweiten Spiegel zu reflektieren und wobei der zweite Spiegel (5) teilweise durchlässig ist, um gleichzeitig die Übertragung der vom ersten Spiegel empfangenen Strahlung mittels Reflexion zu einem Beobachter (V) und die Übertragung einer äußeren Strahlung mittels Durchlassung zu dem Beobachter zu ermöglichen, dadurch gekennzeichnet, daß die Kombinationsoptik einen Lichtleiter (10) aufweist, der im wesentlichen die Form eines Prismas aus lichtdurchlässigem Material besitzt, das zwei Stirnseiten, eine erste (10 AR) und eine zweite (10 AV) Fläche, die zueinander parallel sind, aufweist, daß jede der beiden Stirnseiten von einem der beiden Parabolspiegel gebildet ist, und daß der optische Weg der Lichtstrahlung zwischen dem Objektiv (2) und dem Beobachter (V) nacheinander eine erste Durchquerung einer der beiden parallelen Flächen, eine Reflexion am ersten Spiegel (4) mehrere interne Totalreflexionen an den parallelen Flächen, eine Reflexion am zweiten Spiegel (5) und eine zweite Durchquerung einer der beiden parallelen Flächen umfaßt.

2. System gemäß Anspruch 1, dadurch gekennzeichnet, daß der Lichtleiter (10) außerdem zwei Seitenflächen (10 LD, 10 LG) aufweist, die in bezug auf die genannten parallelen Flächen (10 AR, 10 AV) schräg geschnitten sind, derart, daß sie in Richtung zum Beobachter zusammenlaufen.

3. System gemäß einem der vorangehenden Ansprüche, dadurch gekennzeichnet, daß mit dem Lichtleiter (10) ein lichtdurchlässiges Abschlußelement (10 T; 10 T2) verbunden ist, das den Lichtleiter über den zweiten Spiegel (5) hinaus verlängert.

4. System gemäß Anspruch 1, dadurch gekennzeichnet, daß die erste und die zweite Durchquerung durch dieselbe parallele Fläche (10 AR) verlaufen.

5. System gemäß Anspruch 1, dadurch gekennzeichnet, daß die erste und zweite Durchquerung durch die erste bzw. die zweite parallele Fläche verlaufen.

6. Optisches System zur Kollimation, das hintereinander enthält: einen Bildgenerator (1) zum Liefern einer Lichtstrahlung, ein Kollimationsobjektiv (2) zur Kollimation der Strahlung, eine Kombinationsoptik, die einen brennpunktlosen Aufbau mit einem ersten und einem zweiten Parabolspiegel umfaßt, wobei der erste Spiegel (4) reflektierend ist, um die parallel ausgerichtete Strahlung zum zweiten Spiegel zu reflektieren und wobei der zweite Spiegel (5) teilweise durchlässig ist, um gleichzeitig die Übertragung der vom ersten Spiegel empfangenen Strahlen mittels Reflexion zu einem Beobachter (V) und die Übertragung einer äußeren Strahlung mittels Durchlassung zu dem Beobachter zu ermöglichen, dadurch gekennzeichnet, daß die Kombinationsoptik mehrere aufeinanderfolgende, angewinkelte Lichtleiter (10-1, 10-2, 10-3) enthält, von denen jeder im wesentlichen die Form eines Prismas aus lichtdurchlässigem Material besitzt, das jeweils eine erste und eine zweite Fläche, die zueinander parallel sind, besitzt, daß ein Ende eines ersten Lichtleiters, (10-1) und ein Ende eines letzten Lichtleiters (10-3) jeweils durch einen der beiden Parabolspiegel gebildet wird und daß der optische Weg der Lichtstrahlung zwischen dem Objektiv (2) und dem Beobachter (V) nacheinander eine erste Durchquerung einer der beiden parallelen Flächen des ersten Lichtleiters (10-1), eine Reflexion am ersten Spiegel (4), mehrere innere Totalreflexionen an den parallelen Flächen der Lichtleiter, eine Reflexion am zweiten Spiegel (5) und eine zweite Durchquerung einer der beiden parallelen Flächen des letzten Lichtleiters (10-3) umfaßt.
